Europäisches Patentamt

European Patent Office

Office européen des brevets

(11) Veröffentlichungsnummer: **0 478 898 A2**

## EUROPÄISCHE PATENTANMELDUNG

(21) Anmeldenummer: **91110495.8**

(22) Anmeldetag: **25.06.91**

(51) Int. Cl.5: **G01B 11/08**

(30) Priorität: **01.10.90 DE 4030994**

(43) Veröffentlichungstag der Anmeldung:
**08.04.92 Patentblatt 92/15**

(84) Benannte Vertragsstaaten:
**CH DE FR GB IT LI SE**

(71) Anmelder: **DR.-ING. HÖFLER MESSGERÄTEBAU GMBH**
**Im Stöck 2**
**W-7505 Ettlingen(DE)**

(72) Erfinder: **Herzog, Klaus**
**Bahnhofstasse 7**
**W-7082 Oberkochen(DE)**

Erfinder: **Baule, Rainer**
**Im Weisslich 3**
**W-7505 Ettlingen 4(DE)**
Erfinder: **Bertz, Hans-Ulrich**
**Ortenauer Weg 4**
**W-7554 Kuppenheim(DE)**
Erfinder: **Meyer, Manfred Wilhelm**
**Liebigstrasse 32**
**W-7302 Ostfildern-Scharnhausen(DE)**

(74) Vertreter: **Lemcke, Rupert, Dipl.-Ing. et al**
**Patentanwälte Dipl.-Ing. R. Lemcke Dr.-Ing.**
**H.J. Brommer Bismarckstrasse 16 Postfach 4026**
**W-7500 Karlsruhe 1(DE)**

(54) **Prüfeinrichtung für rotationssymmetrische Werkstücke.**

(57) Es wird eine Prüfeinrichtung für rotationssymmetrische Werkstücke angegeben, bei der eine Spannvorrichtung das Werkstück trägt und auf Führungen wenigstens ein Meßschlitten verfahrbar ist, der einen radial zum Werkstück verfahrbaren und einstellbaren Lasermeßkopf trägt, in dessen Strahlenband das durch dieses angetastete Werkstück über einen Teil der Breite des Strahlenbandes eintaucht. Dabei ist vorgesehen, daß dem Meßkopf bezüglich des Werkstückes diametral gegenüber ein Tastkopf radial zum Werkstück verfahrbar und einstellbar angeordnet ist, welcher einen radial zum Werkstück auslenkbaren und mit einem Meßwertgeber in Verbindung stehenden Meßtaster trägt, und daß durch den Tastkopf die Einstellung des Meßkopfes radial zum Werkstück derart steuerbar ist, daß das Werkstück im wesentlichen bis zur Hälfte des Strahlenbandes in dieses eintaucht.

Fig. 1

EP 0 478 898 A2

Die Erfindung betrifft eine Prüfeinrichtung für rotationssymmetrische Werkstücke mit in Axialrichtung des Werkstückes verlaufenden Längsführungen, auf denen eine entlang der Längsführungen verstellbare Spannvorrichtung das Werkstück trägt und auf denen wenigstens ein Meßschlitten verfahrbar ist, der einen radial zum Werkstück verfahrbaren und einstellbaren Lasermeßkopf trägt, welcher das Werkstück zur Prüfung dessen Durchmessers mit einem zur Außenkontur des Werkstückes tangentialen Strahlenband antastet, in das das Werkstück bis über einen Teil der Breite des Strahlenbandes eintaucht.

Bei derartigen bekannten Prüfeinrichtungen, bei denen die Werkstückachse horizontal oder vertikal angeordnet sein kann, wird das Strahlenband des Lasermeßkopfes in der Regel dadurch erzeugt, daß ein einzelner Laserlichtstrahl mit Hilfe eines Drehspiegels und einer Linse parallel verschoben wird. Dadurch ergeben sich bezüglich des geschaffenen Strahlenbandes bedingt durch die Verschwenkung des Drehspiegels einerseits und Aberrationen des Linsensystems andererseits Strahlenbänder, die außerhalb ihrer Mitte zunehmend mit Ungenauigkeiten behaftet sind, die sich aus dem System des Lasermeßkopfes ergeben.

Darüber hinaus wirken sich auf die mit dem Lasermeßkopf erzielbare Meßgenauigkeit Gegebenheiten der Oberfläche des zu prüfenden Werkstückes aus, die sich aus der werkstückgegebenen Oberflächenrauheit ableiten so wie beispielsweise aus dem Umstand, ob das Werkstück eine blanke oder dunkle, beispielsweise schwarze Oberfläche aufweist. Hier fließt also insbesondere in die Einstellung aber auch in das Prüfergebnis des Lasermeßkopfes eine Ungenauigkeit gegenüber der Beschaffenheit des zu prüfenden Werkstückes ein, die der Lasermeßkopf zu Fehleranzeigen verarbeitet, ohne daß tatsächlich Durchmesser- bzw. Rundheitsfehler vorliegen.

Aufgabe der Erfindung ist es daher, eine Prüfeinrichtung der eingangs genannten Art so zu gestalten, daß die Durchmesserprüfung des Werkstückes jeweils nur mit dem optimalen Querschnittsbereich des Strahlenbandes des Lasermeßkopfes stattfindet, wobei die Einstellung dieses optimalen Arbeitsbereiches des Laserbandes frei von Einflüssen aus der Oberflächenbeschaffenheit des jeweiligen Werkstückes sein soll.

Diese Aufgabe ist ausgehend von einer Prüfeinrichtung der eingangs genannten Art erfindungsgemäß dadurch gelöst, daß dem Meßkopf bezüglich des Werkstückes diametral gegenüber ein Tastkopf radial zum Werkstück verfahrbar und einstellbar angeordnet ist, daß der Tastkopf einen radial zum Werkstück auslenkbaren und mit einem Meßwertgeber in Verbindung stehenden Meßtaster trägt und daß durch den Tastkopf die Einstellung des Meßkopfes radial zum Werkstück derart steuerbar ist, daß das Werkstück im wesentlichen bis zur Hälfte des Strahlenbandes in dieses eintaucht.

Durch diese erfindungsgemäße Einrichtung kann also das Werkstück ohne Ansehung seiner Oberflächenbeschaffenheit durch den Tastkopf bzw. den damit verbundenen Meßtaster angefühlt werden und es kann davon abgeleitet der Lasermeßkopf so eingestellt werden, daß er die Außenkontur des Werkstückes mit der optisch schärfsten Mitte des Strahlenbandes antastet.

Selbstverständlich muß dabei eine Grundeinstellung der Prüfeinrichtung Voraussetzung sein, die dafür sorgt, daß dem Meßtaster die optisch scharfe Mitte des Strahlenbandes zugeordnet ist.

In der Praxis wird so vorgegangen, daß bezüglich eines Sollwertes des Werkstückes in die Einrichtung zunächst ein Kaliber eingespannt wird, um die Sollwerteinstellung für den zu prüfenden Durchmesser vorzunehmen. Davon ausgehend kann dann auch für im Durchmesser gestufte Werkstücke mittels der üblicherweise mit Prüfeinrichtungen der in Rede stehenden Art verbundenen Programmsteuerung eine stufenweise Verstellung bzw. Einstellung des Meßkopfes derart vorgenommen werden, daß der Meßkopf bei seinem Weg über die axiale Länge des sich gegebenenfalls bei der Prüfung verhältnismäßig langsam drehenden Werkstückes die verschiedenen zu prüfenden Werkstückdurchmesser annimmt.

Vor allem schafft aber der Gegenstand der Erfindung bei der Einstellung des Meßkopfes Unabhängigkeit von Oberflächenbeschaffenheiten des Werkstückes, wie sie insbesondere durch Rauheiten, blanke oder nicht blanke Gestaltung gegeben sein können, so daß sich eine neutrale, direkt von dem Werkstückdurchmesser bzw. dem Durchmesser des Kalibers ableitende Einstellung des Meßkopfes auf die Antastung des Werkstückes durch die Mitte des Strahlenbandes ergibt.

Zur Ausgestaltung des Gegenstandes der Erfindung ist es zweckmäßig, daß sowohl der Meßkopf als auch der Tastkopf zu ihrer Radialeinstellung gegenüber dem Werkstück bzw. dem Kaliber mit einer Stelleinrichtung versehen sind, die jeweils eine Motor-Tachoeinheit sowie ein inkrementales Längenmeßsystem enthält, und daß über den Stellwert des Längenmeßsystems des Tastkopfes die Tätigkeit der Motor-Tachoeinheit des Meßkopfes derart steuerbar ist, daß das Längenmeßsystem des Meßkopfes einen mit dem Stellwert des Längenmeßsystems des Tastkopfes übereinstimmenden Stellwert annimmt.

In diesem Rahmen ist es weiterhin vorteilhaft, daß die jeweilige Stelleinrichtung ausgehend von der Motor-Tachoeinheit gegebenenfalls über Getriebemittel mit einer am Meßschlitten gelagerten und am Meßkopf bzw. Tastkopf angreifenden Stellspindel zur Radialeinstellung von Meßkopf bzw. Tastkopf in Verbindung steht.

Im Rahmen des vorstehend geschilderten Erfindungsgedankens können Meßkopf und Tastkopf auf einem gemeinsamen Meßschlitten angeordnet sein, wenn es nur um die Überprüfung der Werkstückdurchmesser bzw. deren Rundlaufes geht. Sind jedoch weitere Meßaufgaben erwünscht, wie beispielsweise die Prüfung der Axiallage von Planflächen, die Gestaltung von Bunden und Welleneinstichen, so kann es in Weiterbildung des Erfindungsgedankens zweckmäßig sein, daß sowohl der Meßkopf als auch der Tastkopf über einen eigenen Meßschlitten verfügen, und daß die Meßschlitten voneinander getrennt durch jeweilige Vorschubmittel auf den zugeordneten Längsführungen verfahrbar sind. Bei dieser Ausbildung des Gegenstandes der Erfindung läßt sich über die axiale Länge des Werkstückes die Durchmesserprüfung sehr schnell mittels des Lasermeßkopfes ausführen, während dann jeweils bei Auftreten entsprechender, radial gerichteter Planflächen, Einstichen in das Werkstück etc. in an sich bekannter, konventioneller Weise deren Prüfung durch den Meßtaster erfolgen kann.

Zu diesem Zweck ist in Ergänzung der Prüfeinrichtung in der bisher beschriebenen Weise der Meßtaster des Tastkopfes an diesem zusätzlich in zum Werkstück achspralleler Richtung auslenkbar gelagert und in dieser Richtung mit einem Meßwertgeber in Verbindung.

Weitere Merkmale und Einzelheiten der Erfindung ergeben sich aus der nachfolgenden Beschreibung von Ausführungsformen, die auf der Zeichnung dargestellt sind. In der Zeichnung zeigen:

Fig. 1     die perspektivische Gesamtansicht einer Prüfeinrichtung nach der Erfindung;

Fig. 2     eine vertikale Schnittansicht der Einrichtung gemäß Fig. 1 auszugsweise im Bereich von Meßkopf und Meßtaster;

Fig. 3     die perspektivische Ansicht einer abgewandelten Prüfeinrichtung nach Art der Darstellung gemäß Fig. 1 und

Fig. 4     eine Schnittansicht entsprechend der Darstellung gemäß Fig. 2 bei der Einrichtung gemäß Fig. 3.

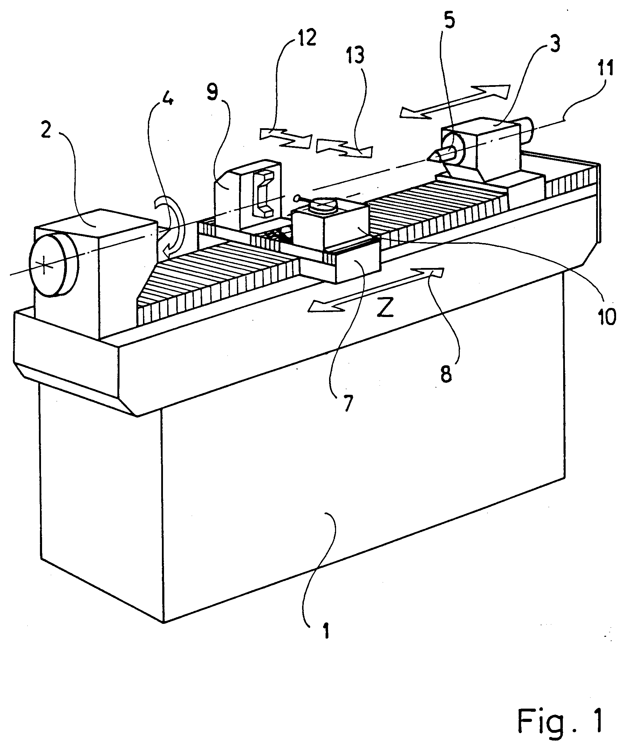

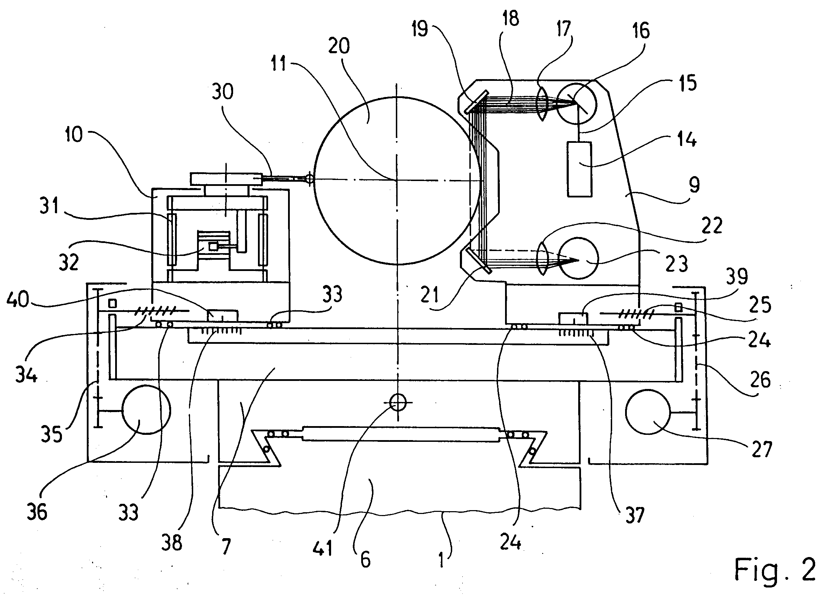

Fig. 1 zeigt ein Maschinengestell 1 einer Prüfeinrichtung für rotationssymmetrische Werkstücke. Zur Aufnahme dieser Werkstücke, die in Fig. 1 nicht dargestellt sind, dienen Reitstöcke 2, 3, zwischen deren Pinolen 4, 5 die Werkstücke in an sich bekannter Weise einspannbar sind. Dabei ist der Reitstock 2 mit der Pinole 4 feststehend auf dem Maschinengestell 1 angeordnet, während der Reitstock 3 mit der Pinole 5 auf dem Maschinengestell 1 über Längsführungen 6, wie sie sich aus Fig. 2 ergeben, axial gegenüber dem Reitstock 2 verstellbar ist.

Auf den Längsführungen 6 ist, wobei auch auf Fig. 2 verwiesen wird, ein Meßschlitten 7 verfahrbar in Richtung des Doppelpfeiles 8, auf dem ein Lasermeßkopf 9 und ein Tastkopf 10 radial in Richtung auf die Drehachse 11 des Werkstückes verstellbar und einstellbar sind entsprechend den Doppelpfeilen 12, 13.

Wie mehr im einzelnen aus Fig. 2 ersichtlich, weist der Lasermeßkopf 9 die Quelle 14 für einen Laserstrahl 15 auf, der über einen Drehspiegel 16 und eine Kollimatorlinse 17 zu einem Strahlenband 18 gestreut wird, das über einen Umlenkspiegel 19 parallel zur Außenkontur eines rotationssymmetrischen Werkstückes 20 geführt einen Umlenkspiegel 21 erreicht, von wo aus es über eine Kondensorlinse 22 auf einen Detektor 23 zurückgeführt ist.

Diese Ausbildung eines Lasermeßkopfes zur Abtastung von Werkstückaußenkonturen ist an sich bekannt und soll daher nicht mehr ins Einzelne beschrieben werden.

Der Lasermeßkopf 9 ist auf dem Meßschlitten 7 über Lagerungen 24 radial zum Werkstück 20 verfahrbar, wobei die Fahrbewegung durch eine am Lasermeßkopf 9 angreifende Gewindespindel 25 gegeben sein kann, die über Getriebemittel 26 von einer Motor-Tachoeinheit 27 angetrieben sein können.

Dem Lasermeßkopf 9 diametral zum Werkstück 20 gegenüber ist ein Tastkopf 10 ersichtlich, der einen Meßtaster 30 trägt, welcher über ein an sich bekanntes Federpaket 31, das am Tastkopf 10 widergelagert ist, radial zum Werkstück 20 auslenkbar ist, wobei die Größe der Auslenkbewegung durch einen Meßfühler 32, der in an sich bekannter Weise durch eine Tauchspule gebildet sein kann, abgefühlt wird.

Auch der Tastkopf 10 ist auf dem Meßschlitten 7 radial zum Werkstück 20 über Lagerungen 33 radial einstellbar, wobei in gleicher Weise wie beim Meßkopf 9 die Radialeinstellung mit Hilfe einer Gewindespindel 34 geschieht, die über Getriebemittel 35 durch eine Motor-Tachoeinheit 36 antreibbar ist.

Sowohl der Meßkopf 9 als auch der Tastkopf 10 korrespondieren im übrigen mit den in der Regel auf einen Glasmaßstab angebrachten Inkrementen 37, 38 eines inkrementalen Längenmeßsystems, das in bekannter Weise dazu korrespondierend jeweils einen Lesekopf 39, 40 aufweist, mit Hilfe dessen die jeweilige Radialstellung bezüglich des Werkstückes 20 abgelesen bzw. eingestellt werden kann.

Zu ergänzen ist noch, daß der Meßschlitten 7 durch eine am Maschinengestell 1 drehbar gelagerte Stellspindel achsparallel zum Werkstück 20 auf den Längsführungen 6 verfahrbar ist, die an einer Gewindebohrung 41 des Meßschlittens 7 angreift.

Zur Einstellung des Strahlenbandes 18 auf die Außenkontur des Werkstückes 20 derart, daß das Werkstück genau bis zur Mitte des Strahlenbandes in dieses eintaucht, wird anstelle des Werkstückes zunächst ein den Solldurchmesser des Werkstückes aufweisendes Kaliber zwischen den Pinolen 4, 5 eingespannt. An die Außenkontur dieses Kalibers wird der Meßtaster 30 angefahren, wobei durch Verknüpfung des Meßfühlers 32 mit dem inkrementalen Längenmeßsystem das absolute Null bezüglich des jeweiligen Sollwertes festgelegt ist. Dabei ergibt sich eine bestimmte Stellung des Lesekopfes 40 an den Inkrementen 38. Die so definierte Radialstellung wird als Stellgröße für die Motor-Tachoeinheit 27 hergenommen, um den Lasermeßkopf 9 solange radial zu verstellen, bis der Lesekopf 39 eine entsprechende Radialeinstellung an den Inkrementen 37 erreicht.

Nunmehr kann entweder durch reine Axialverstellung des Meßschlittens 7 oder durch Drehen eines jetzt anstelle des Kalibers eingespannten Werkstückes 20 oder auch durch Überlagerung beider genannter Bewegungen am Werkstück 20 eine Maß- und Formprüfung am Werkstück stattfinden. Dabei kann auch durch nicht im einzelnen dargestellte, weil bekannte automatische Steuerung der Prüfeinrichtung bei der Bewegung des Lasermeßkopfes 9 in Axialrichtung des Werkstückes 20 die Berücksichtigung gestufter Werkstückdurchmesser stattfinden, indem dann bei der dazu jeweils gehörenden Axialstellung am Werkstück 20 der Lasermeßkopf 9 auf den dazu gehörenden Werkstückradius eingestellt wird.

Bei der anhand der Fig. 1 und 2 beschriebenen Prüfeinrichtung, die beispielsweise zur Durchmesser- und Rundheitsprüfung von Werkstücken gedacht ist, kann der Tastkopf nach erfolgter Radialeinstellung des Lasermeßkopfes 9 abgeschaltet bzw. vorzugsweise mit seinem Meßtaster 30 außerhalb eines Eingriffs mit dem Werkstück 20 gestellt werden, damit der Meßtaster nicht unnötigem Verschleiß unterliegt.

Es besteht jedoch auch die Möglichkeit, bei der Werkstückprüfung durch den Lasermeßkopf gleichzeitig auch durch den Tastkopf bzw. dessen Meßtaster die Kontrolle anderer Werkstückgrößen wie Planflächen, radiale Einstiche etc. vornehmen zu lassen.

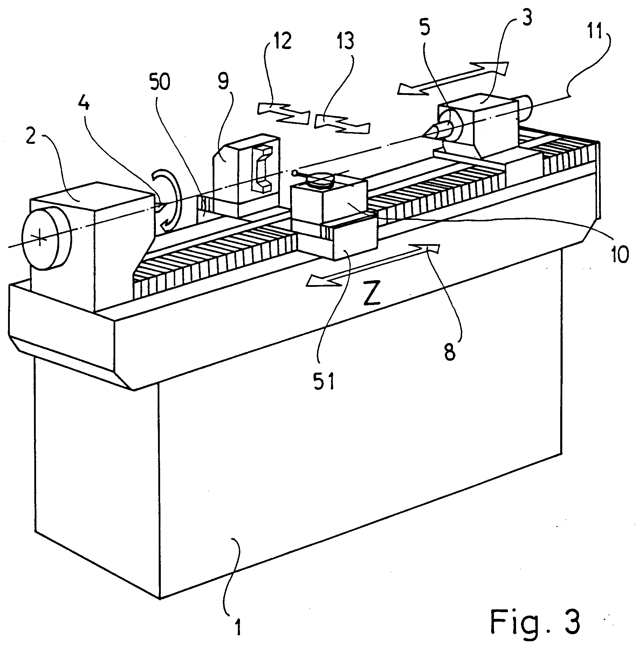

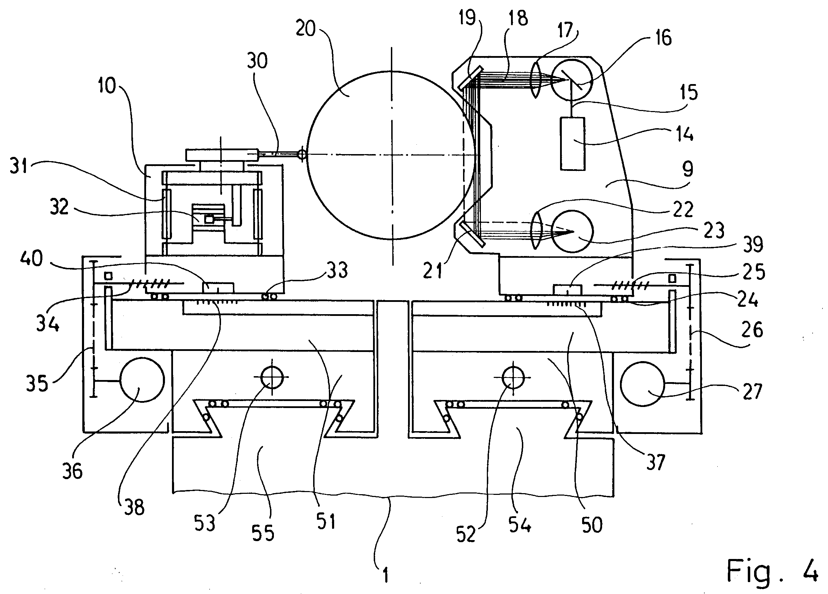

Hierzu kann die Prüfeinrichtung in der aus den Fig. 3 und 4 ersichtlichen Weise gestaltet sein, bei der aus den Fig. 1 und 2 wiederkehrende Teile mit gleichen Bezugszahlen versehen sind.

Die Ausführungsform gemäß den Fig. 3 und 4 unterscheidet sich von der gemäß Fig. 1 und 2 im wesentlichen dadurch, daß Lasermeßkopf 9 und Tastkopf 10 jeweils einen eigenen Meßschlitten 50, 51 haben, wobei diese Meßschlitten über nicht dargestellte, am Maschinengestell 1 drehbar gelagerte Gewindespindeln über ihre Gewindebohrungen 52, 53 entlang Längsführungen 54, 55 des Maschinengestells 1 verfahrbar sind.

Außerdem ist vorgesehen, daß der Meßtaster 30 des Meßkopfes 10 nicht nur, wie dargestellt, in der mit Fig. 2 vergleichbaren Weise radial zum Werkstück 20 auslenkbar ist, sondern auch in nicht dargestellter, weil an sich bekannter Weise, über ein weiteres Federpaket und einen zweiten Meßfühler achsparallel zum Werkstück 20, damit über diesen zweiten Meßfühler gegebenenfalls in Verbindung mit dem ersten Meßfühler 32 in an sich konventioneller Weise radiale Planflächen, Einstiche etc. des Werkstückes 20 angetastet und geprüft werden können.

Im übrigen ist aber für die Radialeinstellung des Lasermeßkopfes 9 die Arbeitsweise der Ausführungsform gemäß Fig. 3 und 4 vergleichbar mit der der Ausführungsform gemäß Fig. 1 und 2, wobei nur dafür Sorge getragen werden muß, daß zur Einstellung des Lasermeßkopfes 9 sich dieser und der Tastkopf 10 genau diametral bezüglich des Werkstückes 20 einander gegenüber befinden. Dies ist durch an sich bekannte Mittel über die Einstellung der Meßschlitten 50, 51 ohne weiteres steuerbar.

## Patentansprüche

1. Prüfeinrichtung für rotationssymmetrische Werkstücke mit in Axialrichtung des Werkstückes verlaufenden Längsführungen, auf denen eine entlang der Längsführungen verstellbare Spannvorrichtung das Werkstück trägt und auf denen wenigstens ein Meßschlitten verfahrbar ist, der einen radial zum Werkstück verfahrbaren und einstellbaren Lasermeßkopf trägt, welcher das Werkstück zur Prüfung dessen Durchmessers mit einem zur Außenkontur des Werkstückes tangentialen Strahlenband antastet, in das das Werkstück bis über einen Teil der Breite des Strahlenbandes eintaucht,
dadurch gekennzeichnet,
daß dem Meßkopf (9) bezüglich des Werkstückes (20) diametral gegenüber ein Tastkopf (10) radial zum Werkstück verfahrbar und einstellbar angeordnet ist, daß der Tastkopf einen radial zum Werkstück auslenkbaren und mit einem Meßwertgeber (32) in Verbindung stehenden Meßtaster (30) trägt und daß durch den Tastkopf die Einstellung des Meßkopfes radial zum Werkstück derart steuerbar ist, daß das Werkstück im wesentlichen bis zur Hälfte des Strahlenbandes (18) in dieses eintaucht.

2. Prüfeinrichtung nach Anspruch 1,

dadurch gekennzeichnet,
daß sowohl der Meßkopf (9) als auch der Tastkopf (10) zu ihrer Radialeinstellung gegenüber dem Werkstück (20) mit einer Stelleinrichtung versehen sind, die jeweils eine Motor-Tachoeinheit (27, 36) sowie ein inkrementales Längenmeßsystem (38, 40; 37, 39) enthält, und daß über den Stellwert des inkrementalen Längenmeßsystems (38, 40) des Tastkopfes (10) die Tätigkeit der Motor-Tachoeinheit (27) des Meßkopfes (9) derart steuerbar ist, daß das Längenmeßsystem des Meßkopfes einen mit dem Stellwert des Längenmeßsystems (38, 40) des Tastkopfes übereinstimmenden Stellwert annimmt.

3. Prüfeinrichtung nach Anspruch 2,
dadurch gekennzeichnet,
daß die jeweilige Stelleinrichtung ausgehend von der Motor-Tachoeinheit (27, 36) über Getriebemittel (26, 35) mit einer am Meßschlitten (7, 50, 51) gelagerten und am Meßkopf (9) bzw. Tastkopf (10) angreifenden Stellspindel (25, 34) zur Radialeinstellung von Meßkopf bzw. Tastkopf in Verbindung steht.

4. Prüfeinrichtung nach einem der vorhergehenden Ansprüche,
dadurch gekennzeichnet,
daß sowohl der Meßkopf (9) als auch der Tastkopf (10) über einen eigenen Meßschlitten (50, 51) verfügen, und daß die Meßschlitten voneinander getrennt durch jeweilige Vorschubmittel (52, 53) auf den zugeordneten Längsführungen (54, 55) verfahrbar sind.

5. Prüfeinrichtung nach Anspruch 4,
dadurch gekennzeichnet,
daß der Meßtaster (30) des Tastkopfes (10) zu diesem zusätzlich in zum Werkstück (20) achsparalleler Richtung auslenkbar gelagert und in dieser Richtung mit einem Meßwertgeber in Verbindung ist.

Fig. 1

Fig. 2

Fig. 3

Fig. 4